# FASCICULE DE BREVET EUROPEEN

(11) **EP 1 194 303 B1**
(45) Date de publication et mention de la délivrance du brevet: **12.05.2004**
(21) Numéro de dépôt: 00943795.5
(22) Date de dépôt: 13.06.2000
(51) Int. Cl.: B60C 15/02, B60B 25/18, B60B 21/12

(54) **ENSEMBLE D'UN PNEUMATIQUE, D'UNE JANTE ET D'UN ADAPTATEUR**
REIFEN-FELGE-UND-ADAPTER-ZUSAMMENBAU
ASSEMBLY COMPRISING A TYRE, A RIM AND AN ADAPTER

(30) Priorité: 21.06.1999 FR 9907880
(43) Date de publication de la demande: 10.04.2002
(73) Titulaire: Sociéte de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: BESTGEN, Luc, F-63140 Chatel-Guyon (FR)
(74) Mandataire: Diernaz, Christian
(86) Numéro de dépôt international: PCT/EP2000/005384
(87) Numéro de publication internationale: WO 2000/078565

(56) Documents cités:
- FR-A- 1 267 264
- FR-A- 2 610 872
- US-A- 3 486 547
- US-A- 5 232 033
- US-A- 5 507 333

## Description

La présente invention concerne un ensemble roulant formé principalement d'un pneumatique, d'une jante et d'un adaptateur entre ladite jante et ledit pneumatique.

Un pneumatique couramment utilisé de nos jours comprend principalement une bande de roulement destinée à assurer le contact avec le sol, ladite bande étant généralement renforcée par une armature de bande de roulement, dite aussi de sommet et permettant de conférer audit sommet les rigidités dans les trois dimensions, nécessaires au roulage du pneumatique. L'armature de sommet maîtrise aussi l'expansion radiale d'une armature de carcasse, généralement composée d'une ou plusieurs nappes d'éléments de renforcement radiaux, ladite armature de carcasse contenant l'agent de gonflage dans des limites raisonnables de déformation du pneumatique statique et en roulage. L'armature de carcasse est, comme connu, généralement ancrée dans chaque bourrelet à un anneau de renforcement, lesdits bourrelets assurant le contact avec siège et rebord de la jante de montage du pneumatique.

La transmission des efforts mécaniques entre le pneumatique et la jante, efforts résultants du gonflage, de l'écrasement et du roulage dudit pneumatique, ainsi que l'étanchéité de ce dernier sont assurés par la répartition et la grandeur des forces de contact entre le bourrelet et les siège et rebord de jante. Un bon comportement du pneumatique tant du point de vue durée de vie que du point de vue propriétés conférées au véhicule équipé, un bon rapport qualité - prix de la jante de montage ont conduit à adopter un rapport largeur de jante sur largeur axiale maximale du pneumatique voisin de 0,7. Il est manifestement connu que ce rapport n'est qu'un compromis, et qu'un certain nombre de propriétés du pneumatique, par exemple sa tenue de route, sont améliorées par l'usage d'une jante permettant un rapport supérieur; réciproquement d'autres propriétés peuvent être améliorées, bien évidemment au détriment des premières, par un montage sur une jante étroite, c'est-à-dire conduisant à un rapport, tel que défini ci-dessus, voisin ou inférieur à 0,40.

Le brevet FR 1 267 264, en vue de conférer à un pneumatique les propriétés antagonistes que sont le confort, la tenue de route, une faible résistance au roulement et une grande résistance à l'usure, enseigne une ébauche de solution, consistant à donner à l'armature de carcasse une structure s'opposant efficacement à la flexibilité transversale sans nuire à la flexibilité structurelle radiale. Ladite structure est obtenue par superposition, dans l'armature de carcasse, à la structure initiale d'éléments de renforcement radiaux d'une structure secondaire d'éléments de renforcement circonférentiels inextensibles. Ladite structure secondaire peut, par ailleurs, modifier la forme des flancs du pneumatique, forme conférée par le profil méridien d'équilibre de l'axe moyen de l'armature de carcasse : des éléments de renforcement circonférentiels et inextensibles de diamètre sensiblement égal ou inférieur au diamètre du rebord de jante, et disposés radialement et axialement à l'intérieur des éléments radiaux de l'armature de carcasse permettent à ladite armature d'avoir un profil méridien qui tangente quasi-horizontalement l'élément annulaire d'ancrage de l'armature de carcasse.

Le principe énoncé ci-dessus est repris dans le brevet US 3 486 547, correspondant au préambule de la revendication 1, et plus particulièrement avec application à une largeur de jante de montage nettement inférieure à la largeur de bande de roulement, le rapport de la largeur de jante sur la largeur axiale maximale du pneumatique étant, dans l'exemple donné, de 0,41.

Bien que présentant des propriétés intéressantes, ledit pneumatique n'est pas sans inconvénients, en ce qui concerne la capacité de guidage du véhicule équipé. En effet, l'armature de renforcement destinée à stabiliser la structure secondaire présente, dans la direction circonférentielle une rigidité d'extension très importante et une rigidité de compression nettement plus faible. La différence dans les modules de l'armature de renforcement suivant que l'on travaille en extension ou en compression dans la direction radiale fait en sorte que l'on constate une ovalisation importante de la partie basse extérieure lorsqu'on soumet un tel pneumatique à une charge verticale. Lors de l'application d'un effort transversal sur un tel pneumatique axialement chargé, on constate une réponse non-linéaire du pneumatique suivant que l'effort appliqué a été suffisant ou non pour remettre sous tension la partie mise en compression lors de l'ovalisation.

En vue de remédier aux dits inconvénients, l'invention propose de dissocier dans le pneumatique ci-dessus, la partie pouvant être considéré comme travaillant réellement comme un pneumatique de la partie pouvant être considéré comme travaillant comme une jante. L'ensemble roulant, conforme à l'invention, est constitué d'un pneumatique, d'une jante étroite dont la largeur est au plus égale à 50 % de la largeur axiale maximale du pneumatique gonflé à sa pression de service, et de deux éléments de liaison ou adaptateurs assurant la jonction entre la jante de montage et les bourrelets du pneumatique, lesdits adaptateurs étant constitués de mélanges caoutchouteux renforcés et déformables élastiquement au moins dans les deux directions radiale et axiale.

Il faut entendre par adaptateur déformable élastiquement dans les deux directions radiale et axiale un adaptateur permettant dans le sens radial un débattement entre le bourrelet de pneumatique et la jante de montage d'au moins 5 % de la flèche du pneumatique écrasé à charge et pression recommandées, et dans le sens axial un rapprochement du bourrelet de la jante d'une valeur au moins égale à 15 mm à pression nulle, les dites déformations étant annulées si l'on supprime les contraintes ou forces qui en sont la cause.

La jante étroite peut être de différentes sortes : elle peut être constituée, comme connu en soi, de deux sièges de jante prolongés axialement à l'extérieur par deux rebords de jante dirigés radialement vers l'extérieur et réunis axialement à l'intérieur par une gorge de montage. La présence d'une gorge de montage peut s'avérer ne pas être indispensable ; les deux sièges peuvent alors être axialement et radialement prolongés vers l'intérieur par deux disques radiaux joints par boulons. Les deux sièges peuvent être aussi prolongés axialement vers l'intérieur par deux parties plates, elles-mêmes prolongées axialement et radialement par deux disques annulaires radiaux, axialement espacés et permettant la fixation d'un plateau serre-bourrelets pouvant compléter la jante et pouvant éventuellement servir d'appui de soutien de la bande de roulement dans le cas d'un roulage du pneumatique à pression faible voire nulle, ledit plateau étant composé circonférentiellement de plusieurs parties indépendantes. La jante de montage peut aussi être du type jante à rebords dirigés radialement vers l'intérieur, tel que décrit et montré dans le brevet FR 2 610 872, les bourrelets du pneumatique venant se loger sur les sièges de jante par l'intérieur.

Un élément de liaison ou adaptateur entre un bourrelet de pneumatique et la jante étroite de montage est principalement constitué d'un bourrelet assurant l'accrochage de l'adaptateur à la jante, d'une armature de renforcement principale permettant la déformation au moins dans les deux directions radiale et axiale, et créant la liaison proprement dite entre le bourrelet et un renfort métallique d'adaptateur destiné à recevoir le bourrelet de pneumatique. La constitution du bourrelet de l'élément de liaison ou adaptateur est fonction du système d'accrochage de la jante de montage, mais comprend principalement un anneau circonférentiel d'ancrage pouvant être un simple anneau de mélange caoutchouteux renforcé ou non, pouvant être une tringle ou un empilement d'éléments de renforcement orientés circonférentiellement. Autour dudit anneau d'ancrage et par retournement, ou entre les éléments de renforcement de l'anneau et par serrage, est ancrée l'armature de renforcement de l'adaptateur. Ladite armature peut être formée des mêmes constituants que ceux utilisés pour une armature de carcasse connue de pneumatique, c'est-à-dire formée d'une ou plusieurs nappes d'éléments de renforcement radiaux ou croisés d'une nappe à la suivante en faisant avec la direction circonférentielle du pneumatique un angle donné. Les dits éléments de renforcement peuvent être textiles et/ou métalliques et/ou plastiques, sous forme de monofilaments et/ou de câbles et/ou de lames.

Le deuxième bord de l'armature de renforcement de l'adaptateur est réuni à un renfort métallique d'adaptateur. Il faut entendre par renfort métallique d'adaptateur un ensemble formé d'au moins un siège de jante, ledit siège pouvant être éventuellement prolongé axialement à l'extérieur par un rebord de jante, ledit rebord pouvant avoir une hauteur faible et une forme usuelle, en particulier recourbée à son extrémité. Le renfort d'adaptateur est enrobé dans un mélange caoutchouteux, et le bord de l'armature de renforcement de l'adaptateur est ancré audit renfort soit par superposition radialement à l'extérieur, soit par enroulement autour du rebord s'il existe, le bourrelet du pneumatique venant se plaquer au montage sur ladite armature de renforcement de l'adaptateur.

Les caractéristiques et avantages de l'invention seront mieux compris à l'aide de la description qui suit et qui se réfère au dessin illustrant à titre non limitatif des exemples d'exécution, et sur lequel :
* la figure 1 représente schématiquement, vu en section méridienne, une première variante de l'ensemble conforme à l'invention,
* la figure 2 représente schématiquement, vu en section méridienne, une deuxième variante de l'ensemble conforme à l'invention,
* la figure 3 représente schématiquement, vu en section méridienne, une variante de bourrelet d'adaptateur et son accrochage à la jante,
* la figure 4 représente schématiquement, vu en section méridienne, une autre variante de bourrelet d'adaptateur.

L'ensemble conforme à l'invention est composé d'un pneumatique P, d'un adaptateur A et d'une jante de montage J. Le pneumatique P est, comme connu, formé d'une bande de roulement renforcée par une armature de sommet d'une ou plusieurs couches d'éléments de renforcement et réunie à deux bourrelets B de part et d'autre du plan équatorial XX' par l'intermédiaire de deux flancs 13. Une armature de carcasse 10 renforçant principalement les flancs 13 est ancrée dans chaque bourrelet à au moins une tringle de type "tressé" 11 pour former des retournements 12, séparés de la partie principale d'armature de carcasse par des profilés de forme quasi-triangulaire 14.

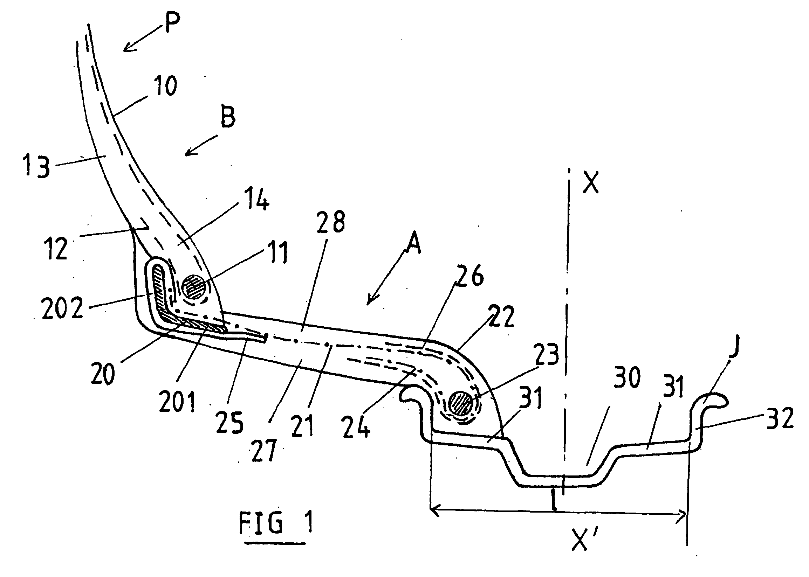

La jante de montage J est, dans le cas décrit (figure 1), une jante de constitution usuelle avec une gorge 30 dite de montage et réunissant, de part et d'autre du plan équatorial, deux sièges de jante 31, dont les génératrices tronconiques font avec l'axe de rotation un angle de 5°, lesdits sièges étant axialement vers l'extérieur prolongés par des rebords de jante 32 dont les bords radialement extérieurs sont fortement recourbés. La particularité de la jante J est sa largeur axiale 1, ladite largeur 1 étant égale, dans le cas étudié, à 45 mm, et très inférieure à 50 % de la largeur axiale maximale du pneumatique monté et gonflé à sa pression recommandée.

Entre la jante J et le bourrelet B du pneumatique P, est disposé un adaptateur A constitué principalement d'un élément d'adaptateur 20, réuni à un bourrelet d'adaptateur 22 par une armature de renforcement 21. Le renfort d'adaptateur 20, métallique dans l'exemple décrit mais qui pourrait être en matériau plastique ou en matériau composite telle qu'une résine renforcée par des fibres de nature quelconque, a un module de compression égal ou sensiblement égal à son module d'extension. Il est formé d'un siège 201 incliné, dans cet exemple et par rapport à l'axe de rotation de l'ensemble, d'un angle de 5°, et prolongé axialement et radialement à l'extérieur par un rebord 202, les dimensions des dits éléments étant normalisées que ce soit la hauteur du rebord 202 ou la largeur axiale du siège 201. Les parois du renfort 20 sont traitées, par exemple laitonnées dans le cas étudié de renfort métallique, pour permettre une adhésion correcte avec les mélanges caoutchouteux utilisés dans l'armature de renforcement principale 21 et les armatures additionnelles éventuelles de l'adaptateur A. L'armature principale 21 est formée d'une nappe de câbles textiles en polyamide aromatique, parallèles entre eux dans la nappe et radiaux , et ladite nappe est d'une part accolée axialement à l'intérieur et radialement à l'extérieur aux parois du renfort métallique 20 d'adaptateur et d'autre part ancrée dans chaque bourrelet 22 d'adaptateur à un élément annulaire 23 de renforcement de bourrelet, tel qu'un tringle, pour former un retournement 24. L'armature principale 21 est complétée par des armatures additionnelles: dans le bourrelet 22, axialement à l'extérieur de la partie principale de la nappe de renforcement 21 et de son retournement 24, est disposée une première nappe 26 de renforcement de bourrelet, formée d'un tissu en polyamide aliphatique formé d'éléments de renforcement, parallèles entre eux dans chaque couche de tissu et croisés entre eux ; du côté du renfort 20 d'adaptateur A est disposée une armature additionnelle 25 formée d'un tissu identique au précédent formé de deux couches d'éléments textiles en .polyamide aliphatique, parallèles entre eux dans chaque nappe et croisés d'une couche à la suivante en faisant avec la direction circonférentielle un angle de 45°, ladite armature 25 recouvrant partiellement la paroi axialement intérieure puis l'extrémité supérieure puis la paroi axialement extérieure du rebord 202 et enfin la paroi radialement intérieure du siège 201 pour avoir un bord accolé à la nappe de renforcement principale 21, bord dont l'extrémité est distante du plan équatorial d'une quantité inférieur à la distance séparant dudit plan l'extrémité axialement intérieure du siège 201. L'adaptateur A est complété, d'une part par une couche 27 de mélange caoutchouteux de protection recouvrant à l'extérieur du renfort 20, la face radialement intérieure de l'adaptateur et assurant la liaison avec le crochet de la jante de montage J en entourant les armatures 21 et 26, et d'autre part sur sa face radialement intérieure destinée à être en contact avec le gaz de gonflage de l'ensemble, par une couche intérieure 28 de mélange imperméable audit gaz.

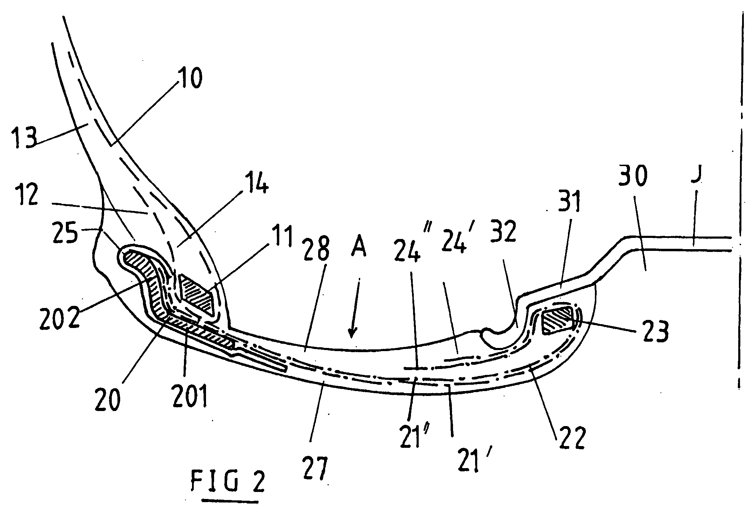

L'ensemble montré sur la figure 2 diffère de celui montré sur la figure 1 par :
* le pneumatique P, ledit pneumatique ayant d'une part des bourrelets dont les sièges sont inclinés par rapport à l'axe de rotation de l'ensemble d'un angle égal à 20°, et d'autre part renforcés par des tringles de type à fils rectangulaires ;
* la jante de montage J, ladite jante ayant une gorge de montage 30 tournée vers l'intérieur de l'ensemble, des sièges 31 inclinés par rapport à l'axe de rotation d'un angle de 15°, lesdits sièges 31 étant prolongés axialement à l'extérieur et radialement vers l'intérieur par des rebords de jante 32 à bords recourbés, ladite jante recevant les bourrelets de l'adaptateur par l'intérieur ;
* l'adaptateur A, ledit adaptateur étant constitué :
   a) d'un renfort métallique 20 d'adaptateur, formé d'un siège 201 incliné par rapport à l'axe de rotation de l'ensemble d'un angle égal à 15° et prolongé axialement et radialement à l'extérieur par un rebord 202, les autres dimensions des dits éléments étant normalisées que ce soit la hauteur du rebord 202 ou la largeur axiale du siège 201,
   b) d'une armature de renforcement principale 21, formée de deux nappes de câbles textiles 21' et 21" en polyester, parallèles entre eux dans chacune des nappes mais croisés d'une nappe 21' à la suivante 21" en faisant avec la direction circonférentielle de l'ensemble un angle de 45°, les dites nappes étant comme précédemment d'une part accolées axialement à l'intérieur et radialement à l'extérieur aux parois prétraitées du renfort 20 d'adaptateur et d'autre part ancrées dans chaque bourrelet 22 d'adaptateur à un élément annulaire 23 de renforcement de bourrelet, tel qu'un tringle, pour former des retournements 24' et 24" dont les extrémités sont décalées axialement l'une par rapport à l'autre,
   c) d'une armature additionnelle complétant l'armature principale 21 : du côté du renfort 20 d'adaptateur A est disposée une armature additionnelle 25 formée du même tissu que précédemment d'éléments textiles, ladite armature 25 recouvrant partiellement la paroi axialement intérieure puis l'extrémité supérieure puis la paroi axialement extérieure du rebord 202 et enfin partiellement la paroi radialement intérieure du siège 201 pour avoir un bord accolé à la nappe de renforcement principale 21, bord dont l'extrémité est distante du plan équatorial d'une quantité inférieur à la distance séparant dudit plan l'extrémité axialement intérieure du siège 201 ;
   d) l'adaptateur A étant aussi complété, d'une part par les couches de mélange caoutchouteux de protection 27, et d'autre part sur sa face radialement intérieure par la couche intérieure 28 de mélange imperméable audit gaz.

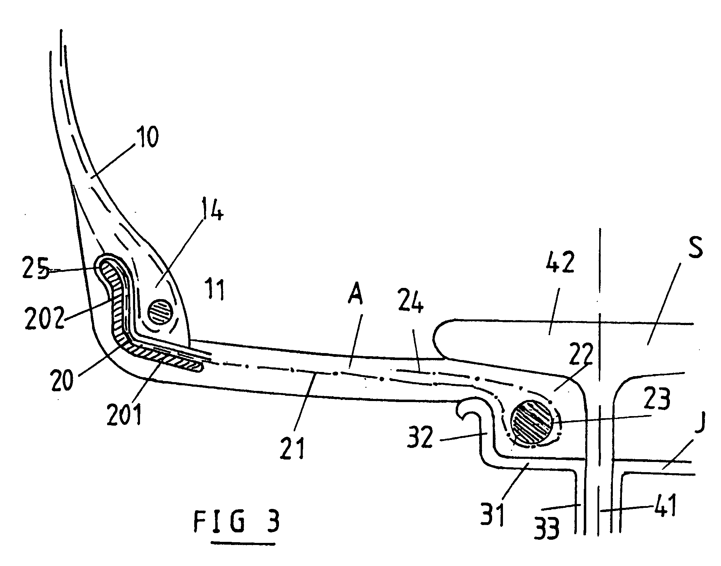

L'ensemble de la figure 3 diffère de l'ensemble de la figure 1 par la constitution du bourrelet 22 de l'adaptateur A et par la constitution du système d'accrochage du bourrelet sur la jante de montage J. Ledit système est en effet composée de deux éléments : la jante proprement dite J et un serre-bourrelets S. La jante J est formée de deux rebords 32 usuels, prolongés radialement à l'intérieur et axialement à l'intérieur par deux sièges de jante 31 plats, eux-mêmes prolongés radialement vers l'intérieur par deux disques annulaires 33 radiaux présentant entre eux un certain espacement axial. Dans ledit espacement viennent se loger les disques 41 radialement mobiles d'au moins trois parties 42 qui, réunies circonférentiellement, forment le plateau du serre-bourrelets S, plateau dont la largeur axiale est suffisante pour permettre le serrage et le coincement des bourrelets sur les sièges de jante 31. Le plateau 42 peut aussi avantageusement servir de support de la bande de roulement du pneumatique de l'ensemble lorsque ledit pneumatique roule à pression faible voire nulle. Quant à la constitution du bourrelet d'adaptateur A, elle est adaptée en ce qui concerne sa composition et sa forme au principe d'accrochage décrit ci-dessus ; en particulier il est avantageux que la nappe de renforcement 21 de l'adaptateur soit ancrée par enroulement autour d'un anneau 23 en caoutchouc à haut module de compression mais extensible dans le sens circonférentiel. Par ailleurs, du côté du renfort 20 d'adaptateur A est disposée une armature additionnelle 25 formée d'un tissu identique au précédent formé deux couches d'éléments en .polyamide aliphatique, parallèles entre eux dans chaque nappe et croisés d'une couche à la suivante en faisant avec la direction circonférentielle un angle de 45°, ladite armature 25 recouvrant partiellement la paroi axialement intérieure puis l'extrémité supérieure puis partiellement la paroi axialement extérieure du rebord 202 pour avoir une extrémité située à une distance radiale approximativement égale à la distance entre ledit axe et le milieu dudit rebord 202.

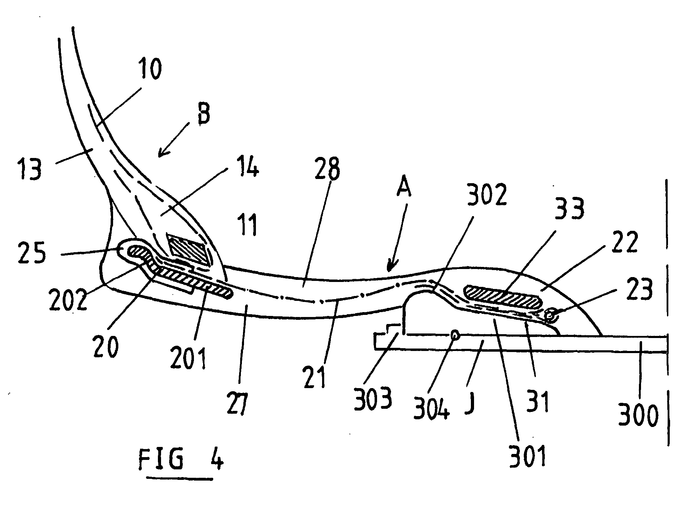

Le dernier exemple d'ensemble, conforme à l'invention, est montré sur la figure 4. Le pneumatique P est identique à celui montré et utilisé dans l'ensemble de la figure 2. La jante de montage J est une jante dite à plusieurs pièces, dont au moins deux pièces sont mobiles. Une telle jante est du même genre que les jantes utilisées pour le montage de certains pneumatiques "Poids-Lourds" et des pneumatiques de "Génie-Civil". Ladite jante est principalement composée d'un fond de jante 300, qui peut être plat, ledit fond de jante étant prolongé d'un seul côté de la jante par une siège conique lui-même prolongé par un cercle ou rebord de jante, siège et rebord étant dudit côté fixes (non montrés). Du côté axialement opposé, une pièce unique 31 mobile, formée d'un rebord 302 et d'un anneau conique 301, peut être enfilée sur le fond de jante après que le bourrelet 22 de l'adaptateur A eut été lui-même amené sur le fond de jante.

Un joint torique 304, pour assurer l'étanchéité de l'ensemble, et un anneau de verrouillage 303 pour bloquer l'ensemble sur le fond de jante, complètent la pièce 31. Il est évident que tout bourrelet 22 de quelque sorte qu'il soit, peut être monté sur une telle jante. L'exemple décrit est relatif à une variante préférentielle où l'armature de carcasse radiale 21 de l'adaptateur A, composée d'une nappe de câbles textiles radiaux, et son retournement 24 sont enserrés entre le siège tronconique de l'anneau mobile 301 de jante et un anneau de renforcement 33 présentant une face radialement intérieure elle-même tronconique, la génératrice de ladite face faisant avec l'axe de rotation le même angle que celui que fait la génératrice du siège de l'anneau conique mobile de la pièce 31. Le retournement 24 d'armature de carcasse 21 est obtenu par enroulement de ladite armature autour d'un anneau circonférentiel 23 possédant une section transversale de faible dimension et une faible résistance à la tension, ledit anneau 23 n'étant utilisé que pour parfaire le blocage de l'armature de carcasse entre les deux surfaces tronconiques de l'anneau 33 et du siège de l'anneau conique 301.

Il est possible, en particulier dans le cas de l'utilisation d'une telle jante, de relier les deux adaptateurs gauche et droit par un élément de mélange caoutchouteux simplement vulcanisé et/ou renforcé tout en restant élastique.

## Revendications

1. Ensemble roulant constitué d'un pneumatique P, d'une jante étroite J dont la largeur est au plus égale à 50 % de la largeur axiale maximale du pneumatique gonflé à sa pression de service, **caractérisé en ce que** deux éléments de liaison ou adaptateurs A assurent la jonction entre la jante de montage J et les bourrelets B du pneumatique P, lesdits adaptateurs A étant constitués de mélanges caoutchouteux renforcés et déformables élastiquement au moins dans les deux directions radiale et axiale.

2. Ensemble roulant selon la revendication 1, **caractérisé en ce qu'**un élément de liaison ou adaptateur A entre un bourrelet B de pneumatique P et la jante étroite J de montage est principalement constitué d'un bourrelet (22) assurant l'accrochage de l'adaptateur A à la jante J, d'une armature de renforcement principale (21) permettant la déformation dans les deux directions radiale et axiale, et créant la liaison proprement dite entre le bourrelet (22) et un renfort (20) d'adaptateur, destiné à recevoir le bourrelet de pneumatique, et dont les modules d'extension et de compression sont sensiblement égaux.

3. Ensemble roulant selon la revendication 1, **caractérisé en ce que** la jante étroite J de montage est constituée, comme connu en soi, de deux sièges de jante (31) à génératrices tronconiques, prolongés axialement à l'extérieur par deux rebords ou cercles de jante (32) dirigés radialement vers l'extérieur, et réunis axialement à l'intérieur par une gorge de montage (30).

4. Ensemble roulant selon la revendication 1, **caractérisé en ce que** la jante étroite J de montage est démunie de gorge de montage et constituée, comme connu en soi, de deux sièges de jante (31), prolongés axialement à l'extérieur par deux rebords ou cercles de jante (32) dirigés radialement vers l'extérieur, et prolongés axialement et radialement vers l'intérieur par deux disques radiaux (33) joints par boulons.

5. Ensemble roulant selon la revendication 4, **caractérisé en ce que** les deux disques radiaux (33) sont axialement espacés et permettent la fixation d'un plateau serre-bourrelets S complétant la jante J et pouvant éventuellement servir d'appui de soutien de la bande de roulement dans le cas d'un roulage du pneumatique à pression faible voire nulle, ledit plateau S étant composé de plusieurs parties circonférentiellement indépendantes.

6. Ensemble roulant selon la revendication 1, **caractérisé en ce que** la jante de montage J a une gorge de montage (30) tournée vers l'intérieur de l'ensemble, ladite gorge étant prolongée axialement à l'extérieur par des sièges (31) tronconiques ou plats, et lesdits sièges (31) étant eux-mêmes prolongés axialement à l'extérieur et radialement vers l'intérieur par des rebords de jante (32) à bords recourbés, ladite jante recevant les bourrelets de l'adaptateur par l'intérieur.

7. Ensemble roulant selon la revendication 1, **caractérisé en ce que** la jante de montage J est principalement composée d'un fond de jante (300) plat, ledit fond de jante étant, d'un côté de la jante, prolongé par une siège conique lui-même prolongé par un cercle ou rebord de jante, siège et rebord, étant dudit côté, fixes, et, du côté axialement opposé, complété d'une part par une pièce mobile (31), composée d'un rebord (302) et d'un anneau conique (301) et pouvant être enfilée sur le fond de jante (300), d'autre part par un anneau de verrouillage (303) pour bloquer ladite pièce (31) sur le fond de jante, et un joint torique (304) assurant l'étanchéité de l'ensemble.

8. Adaptateur A rentrant dans la composition d'un ensemble selon la revendication 2, **caractérisé en ce que** l'armature de renforcement principale (21) est composée d'au moins une nappe d'éléments de renforcement radiaux.

9. Adaptateur A rentrant dans la composition d'un ensemble selon la revendication 2, **caractérisé en ce que** l'armature de renforcement principale (21) est composée d'au moins deux nappes (21') et (21") d'éléments de renforcement, parallèles entre eux dans chaque nappe (21', 21") et croisés d'une nappe (21') à la suivante (21") en faisant avec la direction circonférentielle de l'ensemble un angle pouvant être compris entre 15° et 85°.

10. Adaptateur A selon l'une des revendications 8 ou 9, caractérisé en ce l'armature de renforcement (21) est ancrée dans chaque bourrelet (22) d'adaptateur par enroulement autour d'un anneau circonférentiel d'ancrage (23) en formant un retournement (24).

11. Adaptateur A selon l'une des revendications 8 ou 9, **caractérisé en ce que** l'armature de renforcement (21) est ancrée dans le bourrelet (22) par serrage entre les éléments de renforcement circonférentiels de l'anneau d'ancrage (23).

12. Adaptateur A selon l'une des revendications 8 ou 9, **caractérisé en ce que** l'armature de renforcement (21) et son retournement (24) sont enserrés entre le siège tronconique de la jante de montage J et la face tronconique d'un anneau de renforcement (33) de bourrelet.

13. Adaptateur A selon l'une des revendications 8 ou 9, **caractérisé en ce que** l'armature de carcasse (21) est réunie au renfort métallique (20) d'adaptateur par collage sur les faces radialement extérieure du siège (201) et axialement à l'intérieur du rebord (202).

14. Adaptateur A selon l'une des revendications 8 ou 9, **caractérisé en ce que** l'armature de carcasse (21) est réunie au renfort métallique (20) d'adaptateur par enroulement sur l'extrémité radialement supérieure dudit crochet.

15. Adaptateur A selon l'une des revendications 8 à 11 ; **caractérisé en ce qu'**il comprend aussi des armatures additionnelles de renforcement, d'une part de bourrelets (26) et d'autre part des armatures de recouvrement (25) du renfort métallique (20) d'adaptateur.

16. Adaptateur A selon la revendication 15, **caractérisé en ce qu'**une armature additionnelle de renforcement est composée d'au moins une couche d'éléments de renforcement faisant avec la direction circonférentielle un angle compris entre 10° et 45°.

17. Adaptateur A selon la revendication 15, **caractérisé en ce que** l'armature additionnelle (25) de recouvrement du renfort métallique (20) d'adaptateur est accolée à la paroi axialement extérieure et radialement intérieure dudit renfort, le bord radialement intérieur de ladite armature (25) étant plaquée contre l'armature principale (21).

## Patentansprüche

1. Rollende Baugruppe, die aus einem Reifen P und einer schmalen Felge J gebildet ist, deren Breite höchstens gleich 50% der maximalen, axialen Breite des auf seinen Betriebsdruck aufgepumpten Reifens ist, **dadurch gekennzeichnet, daß** zwei Verbindungselemente oder Adapter A die Verbindung zwischen der Montagefelge J und den Wülsten B des Reifens P sicherstellen, wobei die genannten Adapter A aus verstärkten, kautschukartigen Mischungen gebildet sind und elastisch mindestens in den beiden Richtungen, der radialen und der axialen, verformbar sind.

2. Rollende Baugruppe nach Anspruch 1, **dadurch gekennzeichnet, daß** ein Verbindungselement oder Adapter A zwischen einem Wulst B des Reifens P und der schmalen Montagefelge J in erster Linie aus einem Wulst (22), der die Verankerung des Adapters A auf der Felge J sicherstellt, und einer Haupt-Verstärkungsbewehrung (21), die die Verformung in den beiden Richtungen, der radialen und der axialen, zuläßt, gebildet ist und die eigentliche Verbindung zwischen dem Wulst (22) und einer Verstärkung (20) des Adapters bildet, die dazu bestimmt ist, den Wulst des Reifens aufzunehmen, und deren Dehnungs- und Druckmodule im wesentlichen gleich sind.

3. Rollende Baugruppe nach Anspruch 1, **dadurch gekennzeichnet, daß** die schmale Montagefelge J, wie an sich bekannt, aus zwei Felgensitzen (31) mit kegelstumpfförmigen Erzeugenden gebildet ist, die axial zur Außenseite durch zwei nach außen gerichtete Umrandungen oder Felgenkreise (32) verlängert sind und axial auf der Innenseite durch eine Montageauskehlung (30) vereint sind.

4. Rollende Baugruppe nach Anspruch 1, **dadurch gekennzeichnet, daß** die schmale Montagefelge J keine Montageauskehlung aufweist und, wie an sich bekannt, aus zwei Felgensitzen (31) gebildet ist, die axial nach außen durch zwei Umrandungen oder Felgenkreise (32), die axial nach außen gerichtet sind, sowie axial und radial nach innen durch zwei radiale Scheiben (33) verlängert sind, die durch Schraubbolzen verbunden sind.

5. Rollende Baugruppe nach Anspruch 4, **dadurch gekennzeichnet, daß** die beiden radialen Scheiben (33) axial beabstandet sind und die Befestigung einer Wulstklemmplatte S ermöglichen, die die Felge J vervollständigt und gegebenenfalls als Unterstützungsauflage der Lauffläche im Fall einer Fahrt des Reifens mit geringem Druck und sogar Null Druck dienen kann, wobei die genannte Platte S aus mehreren, in Umfangsrichtung unabhängigen Teilen zusammengesetzt ist.

6. Rollende Baugruppe nach Anspruch 1, **dadurch gekennzeichnet, daß** die schmale Montagefelge J eine Montageauskehlung (30) hat, die der Innenseite der Baugruppe zugewandt ist, wobei die genannte Auskehlung axial nach außen durch kegelstumpfförmige oder flache Sitze (31) verlängert ist und die genannten Sitze (31) ihrerseits axial nach außen und radial nach innen durch Felgenumrandungen (32) mit gekrümmtem Rändern verlängert sind, so daß die genannte Felge die Wülste des Adapters von Innen her aufnimmt.

7. Rollende Baugruppe nach Anspruch 1, **dadurch gekennzeichnet, daß** die Montagefelge J hauptsächlich von einem flachen Felgenboden (300) zusammengesetzt ist, wobei der genannte Felgenboden auf einer Seite der Felge durch einen konischen Sitz verlängert ist, der seinerseits durch einen Felgenkreis oder eine Felgenumrandung verlängert ist, wobei Sitz und Umrandung, die auf der genannten Seite liegen, befestigt sind, und auf der axial gegenüberliegenden Seite einerseits durch ein bewegliches Stück (31), das aus einer Umrandung (302) und einem konischen Ring (301) zusammengesetzt ist und über den Felgenboden (300) aufgezogen werden kann, und andererseits durch einen Verriegelungsring (303), um das genannte Stück (31) auf dem Felgenboden zu blockieren, und durch eine torusförmige Dichtung (304) vervollständigt ist, die die Abdichtung der Baugruppe sicherstellt.

8. Adapter A, der in der Zusammensetzung einer Baugruppe nach Anspruch 2 auftritt, **dadurch gekennzeichnet, daß** die Haupt-Verstärkungsbewehrung (21) aus mindestens einer Lage aus radialen Verstärkungselementen zusammengesetzt ist.

9. Adapter A, der in der Zusammensetzung einer Baugruppe nach Anspruch 2 auftritt, **dadurch gekennzeichnet, daß** die Haupt-Verstärkungsbewehrung (21) aus mindestens zwei Lagen (21') und (21") aus Verstärkungselementen zusammengesetzt ist, die zueinander in jeder Lage (21', 21 ") parallel verlaufen und von einer Lage (21') zur folgenden (21") überkreuz laufen, wobei sie mit der Umfangsrichtung einen Winkel bilden, der zwischen 15° und 85° liegen kann.

10. Adapter A nach einem der Ansprüche 8 oder 9, **dadurch gekennzeichnet, daß** die Verstärkungsbewehrung (21) in jedem Wulst (22) des Adapters durch Aufwickeln um einen Umfangs-Verankerungsring (23) unter Bildung eines Umschlags (24) verankert ist.

11. Adapter A nach einem der Ansprüche 8 oder 9, **dadurch gekennzeichnet, daß** die Verstärkungsbewehrung (21) im Wulst (22) durch Klemmung zwischen den in Umfangsrichtung verlaufenden Verstärkungselementen des Verankerungsringes (23) verankert ist.

12. Adapter A nach einem der Ansprüche 8 oder 9, **dadurch gekennzeichnet, daß** die Verstärkungsbewehrung (21) und ihr Umschlag (24) zwischen dem kegelstumpfförmigen Sitz der Montagefelge J und der kegelstumpfförmigen Fläche eines Wulst-Verstärkungsringes (33) eingeklemmt sind.

13. Adapter A nach einem der Ansprüche 8 oder 9, **dadurch gekennzeichnet, daß** die Karkassenbewehrung (21) mit der metallischen Verstärkung (20) des Adapters durch Verklebung auf der radial äußeren Fläche des Sitzes (201) und der radial inneren Fläche des Umschlags (202) vereint ist.

14. Adapter A nach einem der Ansprüche 8 oder 9, **dadurch gekennzeichnet, daß** die Karkassenbewehrung (21) mit der metallischen Verstärkung (20) des Adapters durch Aufrollen auf dem radial oberen Ende der genannten Krempe vereint ist.

15. Adapter A nach einem der Ansprüche 8 bis 11, **dadurch gekennzeichnet, daß** er auch zusätzliche Verstärkungsbewehrungen einerseits der Wülste (26) und andererseits der Abdeckbewehrungen (25) der metallischen Verstärkung (20) des Adapters aufweist.

16. Adapter A nach Anspruch 15, **dadurch gekennzeichnet, daß** eine zusätzliche Verstärkungsbewehrung aus mindestens einer Schicht aus Verstärkungselementen zusammengesetzt ist, die zur Umfangsrichtung einen Winkel bilden, der zwischen 10° und 45° liegt.

17. Adapter A nach Anspruch 15, **dadurch gekennzeichnet, daß** die zusätzliche Abdeckbewehrung (25) der metallischen Verstärkung (20) des Adapters an der axial äußeren und radial inneren Wand der genannten Verstärkung befestigt ist, wobei der radial innere Rand der genannten Bewehrung (25) gegen die Hauptbewehrung (21) aufgeheftet ist.

## Claims

1. A rolling assembly formed of a tyre P, a narrow rim J, the width of which is at most equal to 50% of the maximum axial width of the tyre inflated to its operating pressure, **characterised in that** two connecting elements or adapters A form the join between the mounting rim J and the beads B of the tyre P, said adapters A being formed of reinforced rubber mixes which are elastically deformable at least in both the radial and axial directions.

2. A rolling assembly according to Claim 1, **characterised in that** a connecting element or adapter A between a bead B of a tyre P and the narrow mounting rim J is primarily formed of a bead (22) which ensures hooking of the adapter A to the rim J, of a main reinforcement armature (21) permitting deformation in both the radial and axial directions, and creating the connection proper between the bead (22) and an adapter reinforcement (20) which is intended to receive the tyre bead, and the moduli of extension and of compression of which are substantially equal.

3. A rolling assembly according to Claim 1, **characterised in that** the narrow mounting rim J, is formed, as is known per se, of two rim seats (31) having frustoconical generatrices, extended axially to the outside by two rim flanges or circles (32) directed radially towards the outside, and joined axially to the inside by a mounting groove (30).

4. A rolling assembly according to Claim 1, **characterised in that** the narrow mounting rim J is devoid of a mounting groove and is formed, as is known *per se,* of two rim seats (31), extended axially to the outside by two rim flanges or circles (32) directed radially towards the outside, and extended axially and radially towards the inside by two radial discs (33) joined by bolts.

5. A rolling assembly according to Claim 4, **characterised in that** the two radial discs (33) are axially spaced apart and permit the fixing of a bead-clamping plate S which completes the rim J and may possibly act as a bearing support for the tread in the event of the tyre travelling at low or even zero pressure, said plate S being composed of several circumferentially independent parts.

6. A rolling assembly according to Claim 1, **characterised in that** the mounting rim J has a mounting groove (30) which is turned towards the inside of the assembly, said groove being extended axially to the outside by frustoconical or flat seats (31), and said seats (31) in turn being extended axially to the outside and radially towards the inside by rim flanges (32) having curved edges, said seat receiving the beads of the adapter via the inside.

7. A rolling assembly according to Claim 1, **characterised in that** the mounting rim J is primarily composed of a flat rim base (300), said rim base, on one side of the rim, being extended by a conical seat which in turn is extended by a rim circle or flange, the seat and flange being fixed on said side and, on the axially opposite side, completed firstly by a mobile part (31) formed of a flange (302) and of a conical ring (301) and being able to be slipped on to the rim base (300), and secondly by a locking ring (303) for locking said part (31) on the rim base, and an O-ring (304) which ensures airtightness of the assembly.

8. An adapter A which forms part of the composition of an assembly according to Claim 2, **characterised in that** the main reinforcement armature (21) is composed of at least one ply of radial reinforcement elements.

9. An adapter A which forms part of the composition of an assembly according to Claim 2, **characterised in that** the main reinforcement armature (21) is composed of at least two plies (21') and (21") of reinforcement elements which are parallel to each other within each ply (21', 21") and are crossed from one ply (21') to the next (21"), forming an angle which may be between 15° and 85° with the circumferential direction of the assembly.

10. An adapter A according to one of Claims 8 or 9, **characterised in that** the reinforcement armature (21) is anchored within each adapter bead (22) by winding around a circumferential anchoring ring (23), forming an upturn (24).

11. An adapter A according to one of Claims 8 or 9, **characterised in that** the reinforcement armature (21) is anchored in the bead (22) by clamping between the circumferential reinforcement elements of the anchoring ring (23).

12. An adapter A according to one of Claims 8 or 9, **characterised in that** the reinforcement armature (21) and its upturn (24) are held tightly between the frustoconical seat of the mounting rim J and the frustoconical face of a bead reinforcement ring (33).

13. An adapter A according to one of Claims 8 or 9, **characterised in that** the carcass reinforcement (21) is joined to the metal adapter reinforcement (20) by gluing to the radially outer face of the seat (201) and the face axially to the inside of the flange (202).

14. An adapter A according to one of Claims 8 or 9, **characterised in that** the carcass reinforcement (21) is joined to the metal adapter reinforcement (20) by winding on the radially upper end of said hook.

15. An adapter A according to one of Claims 8 to 11, **characterised in that** it also comprises additional reinforcement armatures, firstly for beads (26) and secondly covering reinforcements (25) for the metal adapter reinforcement (20).

16. An adapter A according to Claim 15, **characterised in that** an additional reinforcement armature is composed of at least one layer of reinforcement elements forming an angle of between 10° and 45° with the circumferential direction.

17. An adapter A according to Claim 15, **characterised in that** the additional covering reinforcement (25) of the metal adapter reinforcement (20) is joined to the axially outer and radially inner wall of said reinforcement, the radially inner edge of said reinforcement (25) being applied against the main reinforcement (21).
